# FASCICULE DE BREVET EUROPEEN

(11) **EP 1 456 606 B1**
(45) Date de publication et mention de la délivrance du brevet: **23.01.2013**
(21) Numéro de dépôt: 02805368.4
(22) Date de dépôt: 10.12.2002
(51) Int. Cl.: G01C 19/56

(54) **CAPTEUR INERTIEL MICRO-USINE POUR LA MESURE DE MOUVEMENTS DE ROTATION**
MIKROBEARBEITETER TRÄGHEITSSENSOR ZUR MESSUNG VON DREHBEWEGUNGEN
MICROMACHINED INERTIAL SENSOR FOR MEASURING ROTATIONAL MOVEMENTS

(30) Priorité: 20.12.2001 FR 0116555
(43) Date de publication de la demande: 15.09.2004
(73) Titulaire: Thales, 75008 Paris (FR)
(72) Inventeur: NICU, Liviu Thales Intellectual Property, F-94117 Arcueil Cedex (FR); ROUGEOT, Claude Thales Intellectual Property, F-94117 Arcueil Cedex (FR); INGLESE, Jérôme Thales Intellectual Property, F-94117 Arcueil Cedex (FR); LEVERRIER, Bertrand Thales Intellectual Property, F-94117 Arcueil Cedex (FR); LEFORT, Pierre-Olivier Thales Intel. Property, F-94117 ArcueilCedex (FR)
(74) Mandataire: Guérin, Michel
(86) Numéro de dépôt international: PCT/FR2002/004273
(87) Numéro de publication internationale: WO 2003/054477

(56) Documents cités:
- EP-A- 1 098 170
- US-A- 5 635 638
- US-B1- 6 257 059

## Description

L'invention concerne les capteurs inertiels destinés à la mesure de vitesses angulaires, ou gyromètres, et plus précisément les gyromètres micro-usinés selon des technologies de gravure, dépôts, dopages, etc., semblables à celles qui sont utilisées dans le domaine des circuits intégrés électroniques.

L'utilisation des capteurs inertiels micro-usinés est entrée dans une phase de croissance continuelle, notamment dans les domaines de l'aéronautique, de l'automobile, de la robotique, et dans d'autres domaines encore, et ceci grâce au fait qu'aujourd'hui ces microcapteurs arrivent à allier leur robustesse aux avantages issus de leur taille extrêmement petite. A cela s'ajoute le fait de fabriquer ces microcapteurs de manière collective (opérations de fabrication effectuées sur des tranches entières de multiples capteurs ultérieurement divisés en capteurs individuels), ce qui rend le coût de fabrication compétitif par rapport aux dispositifs antérieurs.

On connaît déjà de tels capteurs, réalisés sur des tranches de silicium, la fabrication comprenant notamment des opérations de diffusions de bore et des gravures sèches anisotropes permettant de définir des dimensions précises des éléments de la structure. La structure est globalement plane, dans le plan du substrat de silicium dans laquelle elle est gravée.

La structure d'un gyromètre ainsi réalisé comprend typiquement deux masses mobiles excitées en vibration et reliées en diapason, c'est-à-dire que les deux masses sont reliées à une structure de couplage centrale qui transfère l'énergie de vibration de la première masse vers la deuxième et réciproquement.

Les masses sont excitées en vibration dans le plan de la structure par des forces électrostatiques appliquées par l'intermédiaire de peignes d'électrodes interdigitées. Cette vibration dans le plan de la structure s'exerce perpendiculairement à un axe dit « axe sensible » du gyromètre, qui est un axe de symétrie de la structure en diapason. Lorsque le gyromètre tourne avec une certaine vitesse angulaire autour de son axe sensible, la composition de la vibration forcée avec le vecteur de rotation angulaire engendre, par effet Coriolis, des forces qui mettent les masses mobiles en vibration naturelle perpendiculairement au plan de la structure.

La vibration perpendiculaire au plan est détectée capacitivement par des électrodes placées au-dessus des masses mobiles. Les signaux électriques qui en résultent sont exploités pour en déduire une valeur de la vitesse angulaire autour de l'axe sensible.

Dans l'art antérieur, on a proposé de telles structures, plus ou moins complexes.

Pour obtenir une sensibilité suffisante du gyromètre, c'est-à-dire une aptitude à détecter de faibles vitesses de rotation, il faut que l'amplitude de la vibration excitée dans le plan des masses mobiles soit importante (eu égard aux dimensions des bras de flexion qui les supportent). Mais une forte amplitude de vibration génère des forces élastiques et donc des énergies potentielles de déformation significatives. Ceci a comme effet immédiat l'apparition de phénomènes non-linéaires dans les déformations dynamiques de la structure. La fréquence de résonance mécanique du système devient fortement dépendante de l'amplitude du mouvement, ce qui est difficilement acceptable.

Les structures existantes comportent en général une masse mobile supportée par des bras de flexion liés par encastrement (en anglais : « clamped ») à la masse mobile, chaque bras étant de l'autre côté lui-même supporté (liaison également par encastrement) dans la structure de couplage avec l'autre masse mobile (voir par exemple EP 1 098 170). Dans ces structures, on a également cherché à atténuer les effets de la déformation des bras de flexion en établissant des liaisons articulées plutôt que des liaisons encastrées entre les bras de flexion et la masse mobile ou entre les bras de flexion et la structure de couplage entre masses. Mais ces améliorations réduisent la qualité du couplage mécanique entre masses mobiles, détériorant la qualité de la résonance mécanique de la structure excitée. En particulier, ce mauvais couplage entraîne un écart de fréquence insuffisant (de l'ordre de quelques dizaines de hertz) entre les modes de vibration utiles (en opposition de phase) des masses, et les modes de vibration parasites (en phase) de ces mêmes masses.

On a également proposé des structures mixtes (brevet US 5 635 638) dans lesquels les masses mobiles sont supportées par des bras de flexion jouant à la fois leur rôle de bras de flexion pour supporter la masse mobile et pour définir (par leur raideur) la fréquence de résonance naturelle des masses et également un rôle de structure de couplage avec l'autre masse mobile pour favoriser la mise en opposition de phase des deux masses. Mais l'inconvénient de ces structures est la difficulté de conception du fait du double rôle de ces bras mixtes. Il n'y a pas d'indépendance suffisante entre les deux fonctions de suspension flexible (parallèlement et perpendiculairement au plan des masses) et le rôle de couplage d'énergie mécanique entre masses. Il en résulte un risque élevé de déformations de la structure lors des vibrations. Là encore, des phénomènes de non-linéarité sont à craindre, et il est particulièrement difficile de choisir les caractéristiques de flexibilité des bras pour atteindre les performances désirées.

Un but de l'invention est d'améliorer le comportement du gyromètre sans dégrader ses performances en sensibilité et son coût de fabrication.

A cet effet l'invention propose de rendre aussi indépendantes que possible la structure de couplage de vibration entre masses et les bras de flexion qui supportent la masse mobile. Autrement dit, les bras de flexion ne sont plus intercalés entre la structure de couplage et les masses mobiles, ou encore les masses ne sont plus attachées à la structure de couplage par l'intermédiaire des bras de flexion qui assurent le rappel élastique des masses mises en vibration (rappel tant dans le sens de la vibration dans le plan que dans le sens de la vibration perpendiculaire au plan).

Bien au contraire, la structure de couplage est reliée directement aux masses mobiles par des éléments qui n'ont pas la fonction essentielle de bras de flexion, à savoir une fonction de support flexible de la masse mobile (flexibilité dans le plan et perpendiculairement au plan des masses), ces supports ayant une raideur qui définit, sans influence notable de la présence de la structure de couplage, la fréquence de résonance des masses ; les bras de flexion sont aussi reliés aux masses mobiles, mais d'une manière indépendante de la structure de couplage. Pour que la fréquence de résonance des masses soit peu affectée par la présence de la structure de couplage, on prévoit que la raideur de la structure de couplage (dans le sens de la vibration excitée de la masse dans le plan) soit très différente de la raideur des bras de flexion (en pratique la raideur de la structure de couplage sera beaucoup plus faible que la raideur des bras de flexion).

L'invention propose par conséquent plus précisément un gyromètre micro-usiné à structure mobile plane ancrée sur un substrat fixe, la structure mobile étant symétrique autour d'un premier axe, dit axe sensible, contenu dans ce plan, la structure comprenant deux masses mobiles attachées à des bras de flexion dont la raideur définit la fréquence de résonance principale des masses, l'ensemble d'une masse mobile et de ses bras de flexion étant symétrique par rapport à un deuxième axe parallèle à l'axe sensible et par rapport à un troisième axe perpendiculaire à l'axe sensible, une structure d'excitation de la vibration de chaque masse dans le plan de la structure, une structure de détection d'une vibration des masses transversalement au plan, et une structure de couplage mécanique pour relier les masses entre elles en assurant un transfert d'énergie mécanique de vibration l'une à l'autre, ce gyromètre étant caractérisé en ce que les bras de flexion reliés à une masse mobile sont attachés à la masse mobile d'un côté, à un pied d'ancrage fixe de l'autre, la structure de couplage entre masses étant reliée directement aux masses mobiles d'une manière indépendante des bras de flexion ; cette structure de couplage a une raideur (dans le sens d'excitation de la vibration et dans le sens de détection d'une vibration) notablement différente de la raideur des bras de flexion de manière que la fréquence de résonance principale des masses ne dépende que très peu de la raideur de la structure de couplage.

De préférence, chaque masse mobile est reliée à la structure de couplage en deux points seulement, situés sur un axe de symétrie de la masse, parallèle à l'axe sensible.

Les bras de flexion sont de préférence chacun replié en forme de U, l'extrémité d'une branche du U étant attachée à la masse mobile et l'extrémité de l'autre branche étant reliée à un point d'ancrage fixe du substrat.

Chaque masse est alors reliée à quatre bras de flexion selon une configuration symétrique par rapport à un centre de gravité de la masse mobile, au croisement du deuxième et du troisième axe.

Dans une configuration préférée, chaque masse mobile est reliée par ses bras de flexion à un seul point d'ancrage respectif du substrat fixe, localisé en ce centre de gravité ou centre de symétrie de la masse mobile. Les bras de flexion sont localisés à l'intérieur du périmètre de la masse.

Dans une autre configuration, l'ancrage des bras de flexion sur le substrat fixe se fait non pas en un seul point au centre de la masse mais en deux points, voire quatre points d'ancrage, de part et d'autre de celle-ci. Les bras de flexion sont localisés à l'extérieur du périmètre de la masse, à proximité de ce centre ; la plaque constituant la masse mobile est découpée en son centre pour laisser place au point d'ancrage et aux bras de flexion.

La structure de couplage d'énergie mécanique vibratoire, reliant les deux masses mobiles, est de préférence non ancrée au substrat. Cependant, dans une variante elle peut l'être.

Cette structure de couplage comprend de préférence au moins deux liaisons longitudinales s'étendant de part et d'autre de l'axe sensible, parallèlement à celui-ci, entre les masses mobiles, au moins une liaison transversale reliant entre elles les deux liaisons longitudinales, et au moins deux bras transversaux reliant chaque masse mobile à une liaison longitudinale respective, ces deux derniers bras transversaux étant situés de part et d'autre de la masse mobile et reliés à la masse en deux points d'attache opposés. La raideur des bras transversaux dans le sens de la vibration excitée des masses est faible devant la raideur des bras de flexion dans le même sens.

D'autres caractéristiques et avantages de l'invention apparaîtront à la lecture de la description détaillée qui suit et qui est faite en référence aux dessins annexés dans lesquels :
- la figure 1 représente une structure de gyromètre de conception antérieure ;
- la figure 2 représente une structure de gyromètre selon l'invention ;
- la figure 3 représente une variante de l'invention avec un point d'ancrage de la structure de couplage ;
- la figure 4 représente une autre variante montrant une liaison particulière entre les deux moitiés de la structure de couplage ;
- la figure 5 représente une variante dans laquelle les bras de flexion sont situés autour des masses mobiles et non à l'intérieur du périmètre de celles-ci ;
- la figure 6 représente une variante avec quatre points d'ancrage pour quatre bras de flexion.

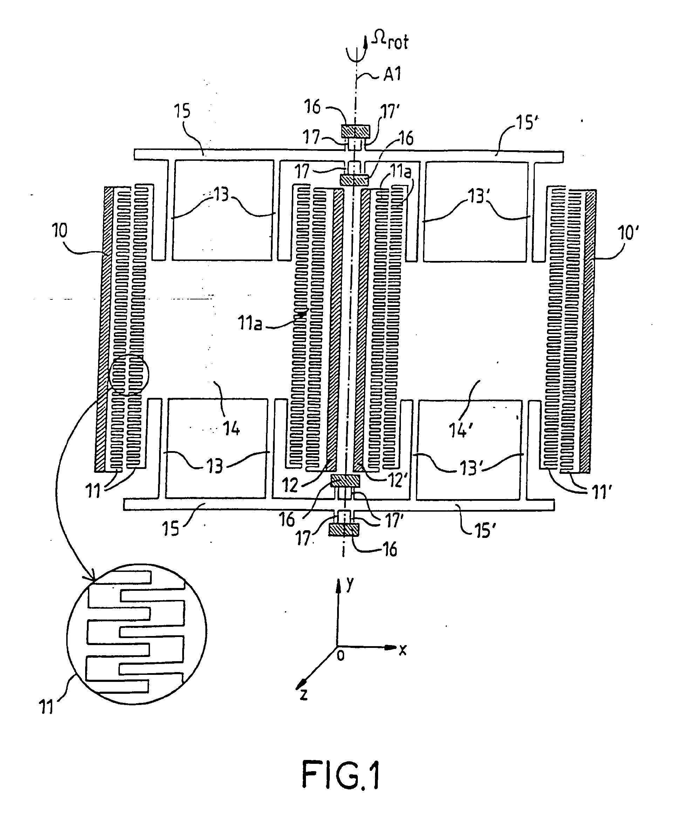

La figure 1 représente le principe général d'un gyromètre que la présente invention vise à perfectionner.

On n'entrera pas dans tous les détails de fabrication d'un gyromètre micro-usiné, étant donné que les principes de fabrication en sont connus depuis plusieurs années et que l'invention porte sur le dessin de la structure mécanique à réaliser et non sur la manière de la réaliser.

On rappelle seulement qu'un gyromètre peut être réalisé à partir d'une superposition de trois substrats micro-usinés qui peuvent être trois substrats de silicium. Le premier et le troisième substrats servent de capot d'une enceinte fermée dans laquelle on fait de préférence le vide, tandis que le deuxième substrat, ou substrat intermédiaire, est usiné selon les dessins qu'on décrira plus loin pour réaliser une structure vibrante avec des masses mobiles et des bras de support ayant les propriétés mécaniques désirées. Le premier substrat peut par ailleurs servir à amener vers le deuxième substrat des courants électriques d'excitation de la structure vibrante parallèlement au plan des substrats, tandis que le troisième substrat, grâce à des électrodes placées en regard des masses mobiles du substrat intermédiaire, peut servir à supporter des circuits de détection de la vibration des masses mobiles perpendiculairement au plan des substrats..

Les premier et troisième substrats peuvent donc être réalisés selon des techniques de microélectronique, avec des opérations de diffusion, de dépôts de couches métalliques, de gravure de ces couches, éventuellement aussi des opérations de gravure profonde du substrat, visant à former des espaces de séparation entre le substrat intermédiaire et le premier ou le troisième substrat pour laisser place à des mouvements de la structure usinée dans le substrat intermédiaire. Le substrat intermédiaire est quant à lui réalisé également avec ce type d'opérations, mais de plus, étant donné que sa fonction principale est mécanique, il est réalisé par des opérations de gravures profondes visant à découper une structure micromécanique à motifs très fins et à épaisseur très fine dans le détail desquels on entrera plus loin.

Typiquement, le substrat intermédiaire est un substrat de silicium sur isolant (SOI) d'une épaisseur de quelques centaines de micromètres, mais cette épaisseur ne sera conservée qu'en des points dits points d'ancrage de la structure vibrante ainsi qu'à la périphérie de la structure le long d'un cadre enfermant l'enceinte à vide contenant la structure vibrante. Ces points ou zones d'ancrage relient le substrat intermédiaire aux deux autres substrats et sont donc solidaires du corps fixe, non vibrant, du gyromètre. Le reste du substrat intermédiaire a une épaisseur beaucoup plus faible, par exemple une soixantaine de micromètres. Il constitue la structure vibrante proprement dite, reliée au corps par les points d'ancrage. La structure de silicium mince est découpée selon les motifs de masse mobile, bras de flexion, structuré de couplage désirés.

Typiquement, l'amincissement de la structure peut être réalisé en utilisant comme substrat intermédiaire un substrat de silicium sur isolant, mais d'autres méthodes sont également possibles. Un substrat de silicium sur isolant est constitué d'un substrat de silicium de quelques centaines de micromètres d'épaisseur qui porte sur sa face avant une fine couche d'oxyde de silicium elle-même recouverte d'une couche de silicium monocristallin de quelques dizaines de micromètres d'épaisseur. L'amincissement consiste à attaquer le silicium du substrat par sa face avant jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde peut elle-même être enlevée sous la couche de silicium, à travers des trous répartis à la surface, par attaque sélective avec un autre produit de manière à ne conserver que la couche superficielle de silicium. La couche d'oxyde subsiste dans les zones d'ancrage et forme une liaison fixe entre la couche superficielle de silicium et le substrat épais.

C'est donc ces motifs de surface que l'on va maintenant décrire en référence aux figures 1 à 6. Ils déterminent les propriétés mécaniques du gyromètre.

Sur la figure 1 (conception antérieure), on voit que la disposition générale de la structure vibrante plane est symétrique par rapport à un premier axe A1 qui est l'axe sensible du gyromètre (axe orienté dans la direction Oy sur le repère orthogonal de la figure 1). Le gyromètre fournit une mesure électrique de la vitesse de rotation angulaire de la structure autour de cet axe sensible A1. Par exemple, si le gyromètre est calé dans un avion de manière à avoir son axe A1 dans l'axe longitudinal de l'avion, le gyromètre mesurera des vitesses de roulis de l'avion.

La structure plane vibrante étant symétrique, la même référence avec un indice 'prime' est utilisée à droite de l'axe A1 pour désigner un élément qui est le symétrique d'un élément de la partie gauche. Les explications seront données en général à propos de la partie gauche et ne seront pas répétées à propos de la partie droite lorsque cela n'est pas nécessaire.

La structure plane comporte deux masses mobiles vibrantes désignées par 14, 14'. Chaque masse est soutenue par quatre bras de flexion 13 lesquels sont par ailleurs attachés à des bras transversaux 15, 15' qui relient les parties symétriques droite et gauche de la structure.

Dans la zone la plus extérieure de la structure, c'est-à-dire dans la partie la plus éloignée de l'axe sensible A1, on trouve un peigne interdigité 11 servant à l'excitation d'une vibration de la masse mobile dans le plan de la structure (direction Ox par rapport au repère orthogonal dessiné sur la figure). Le peigne d'excitation 11 comprend deux demi-peignes en vis-à-vis, l'un porté par la masse mobile, l'autre ancré par un pied d'ancrage 10 sur le corps du gyromètre. Les doigts de l'un des demi-peignes sont des électrodes pénétrant dans les intervalles entre les doigts-électrodes de l'autre demi-peigne. L'application de tensions alternatives entre les demi-peignes, à une fréquence proche de ou égale à la fréquence de résonance mécanique de la structure, engendre une vibration de la masse mobile dans le plan de la structure.

Les demi-peignes sont schématisés sur toutes les figures comme s'ils étaient juxtaposés mais on doit comprendre qu'il y a une interpénétration comme figuré sur le détail entouré sur la figure 1.

Du côté intérieur de la structure vibrante, c'est-à-dire du côté proche de l'axe sensible, il est prévu un autre peigne interdigité facultatif 11a, avec un demi-peigne porté par la masse mobile et un demi-peigne ancré par un pied d'ancrage 12 sur le corps du gyromètre. Ce peigne sert à la détection de la vibration de la masse dans le plan de la structure. L'intérêt de cette détection est qu'elle permet d'asservir électroniquement la fréquence et l'amplitude d'excitation du peigne extérieur 11 pour l'ajuster à la fréquence de résonance mécanique de la structure. Il faut en effet maximiser l'amplitude de la vibration pour augmenter la sensibilité du gyromètre, et cette maximisation suppose que la fréquence d'excitation soit bien accordée sur la fréquence de résonance mécanique.

Les bras de flexion 13 supportent la masse mobile en autorisant un mouvement de vibration d'amplitude relativement importante (quelques micromètres) excité dans le plan, d'où leur étroitesse. Ils ont par exemple une largeur de 40 micromètres pour une longueur de l'ordre du millimètre. Ils doivent également autoriser un mouvement de vibration de la masse perpendiculairement au plan puisque c'est ce mouvement qu'on cherche à détecter. Ils servent de ressorts de rappel pour ces deux mouvements et leur raideur doit être suffisante pour exercer cette force de rappel. Les bras de flexion peuvent, d'un point de vue mécanique, être considérés comme des poutres flexibles encastrées dans la masse mobile d'un côté, dans les bras transversaux 15, 15' de l'autre (de part et d'autre de la masse mobile).

Les bras transversaux 15, 15' constituent la structure de couplage mécanique entre les deux masses mobiles 14, 14'. Ils servent à transmettre une énergie de vibration d'une masse vers l'autre masse, de la même manière qu'une branche d'un diapason musical, frappée pour être mise en vibration, engendre automatiquement, par couplage d'énergie mécanique à travers le pied du diapason, une vibration de l'autre branche. Ce couplage est utile pour assurer la mise en phase des vibrations des deux masses mobiles, sachant qu'il est difficile de synchroniser exactement ces phases par les moyens purement électriques que constituent les peignes d'excitation.

La structure de couplage de la figure 1 comprend donc deux groupes de bras transversaux qui traversent toute la structure perpendiculairement à l'axe sensible, de chaque côté de la masse mobile.

Dans tout ce qui suit, on utilisera l'appellation 'transversal' pour les orientations perpendiculaires à l'axe sensible (dans le plan de la structure) et 'longitudinal' pour les orientations parallèles à l'axe sensible.

Etant donné que la structure plane vibrante ne peut pas 'flotter' par rapport au corps du gyromètre, il faut qu'elle soit ancrée en des points qui ne perturbent ni la vibration des masses ni la transmission d'énergie mécanique entre les masses. C'est pourquoi, à proximité de l'axe sensible, la structure de couplage est supportée par des barres de torsion 17, 17' fixées à des pieds d'ancrage 16. Ces barres de torsion autorisent une rotation des bras transversaux 15 autour de l'axe sensible, sans empêcher la transmission transversale de l'énergie mécanique entre les masses vibrantes.

Pour terminer la description du gyromètre de la figure 1, on précisera que les masses mobiles portent de préférence des électrodes (non représentées) qui viennent en regard d'électrodes correspondantes du premier et/ou du troisième substrat du gyromètre. La vibration des masses hors du plan sous l'effet des forces de Coriolis (direction Oz, qu'il faut comprendre comme perpendiculaire au plan du papier, sur le repère de la figure 1) est détectée capacitivement par ces électrodes. Il peut d'ailleurs être prévu à cet effet d'une part des électrodes de détection proprement dites, d'autre part des électrodes de contre-réaction par lesquels on asservit le mouvement de vibration engendré par les forces de Coriolis, la mesure gyrométrique étant alors déterminée par la mesure des signaux d'asservissement qui sont nécessaires pour s'opposer au mouvement des masses.

La structure de gyromètre ainsi décrite présente des inconvénients dus à des phénomènes de non-linéarités, que la présente invention cherche à minimiser.

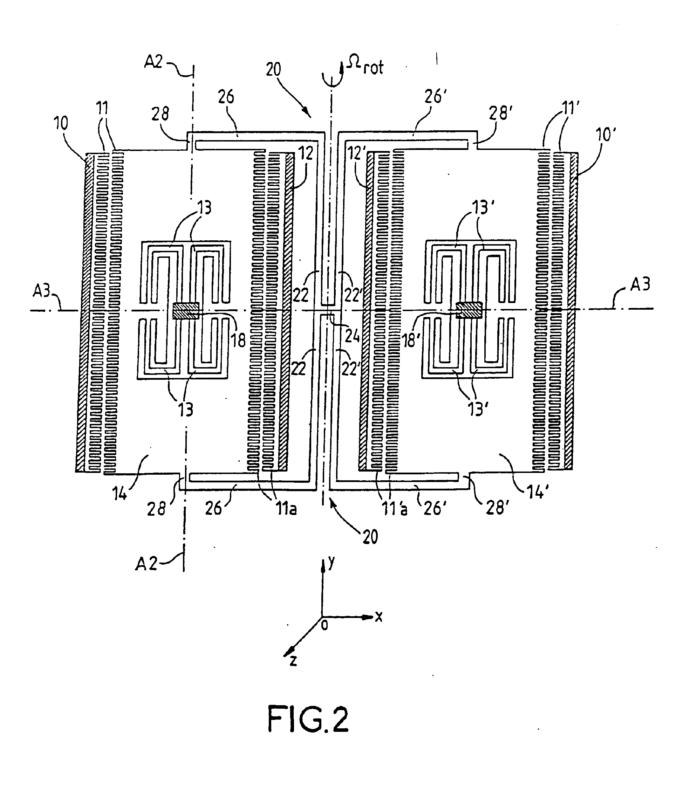

La figure 2 représente, dans un mode de réalisation préféré, le principe de l'invention. Sur cette figure et sur les figures suivantes, les éléments qui correspondent fonctionnellement à ceux de la figure 1 sont désignés par les mêmes références

Au lieu que les masses mobiles 14 soient suspendues à des bras de flexion eux-mêmes attachés à la structure de couplage entre masses, une indépendance est établie entre les bras de flexion 13 et la structure de couplage désignée ici par 20 : les bras de flexion 13 sont attachés à la masse mobile d'un côté, à un pied d'ancrage fixe de l'autre ; la structure de couplage est attachée directement à la masse mobile sans passer par les bras de flexion. Et la structure de couplage ne constitue pas en elle-même des bras de flexion pour supporter la masse mobile avec une raideur calculée pour donner une fréquence de résonance principale choisie.

Dans le cas de la figure 2, la structure de couplage 20 n'est pas fixée, ni directement ni indirectement, à un pied d'ancrage, alors que dans la figure 1 elle était fixée, indirectement par l'intermédiaire des bras de torsion 17, aux pieds d'ancrage 16.

D'autre part, les bras de flexion 13 ont de préférence chacun une forme repliée en U. Une des branches du U est fixée, à son extrémité, au pied d'ancrage, l'autre branche est fixée, à son extrémité, à la masse mobile 14. Les branches sont orientées longitudinalement, c'est-à-dire parallèlement à l'axe sensible.

Il y a quatre bras de flexion 13 pour chaque masse mobile. L'ensemble de la masse mobile et des quatre bras de flexion est constitué de préférence symétriquement par rapport à un deuxième axe A2, qui est parallèle à l'axe sensible A1. En pratique, l'ensemble de la masse mobile et des quatre bras de flexion est symétrique également par rapport à un troisième axe A3, perpendiculaire à l'axe sensible A1.

Le pied d'ancrage, désigné par 18 sur la figure 2, est alors de préférence commun aux quatre bras de flexion, et il est situé au centre de gravité de la masse mobile, lui-même situé à l'intersection des axes de symétrie A2 et A3.

Lors de la gravure de la plaque de silicium aminci, un espace est donc réservé au centre de la masse mobile pour y découper les quatre bras de flexion en U, la masse mobile proprement dite entourant ces quatre bras et le pied d'ancrage 18.

Là encore, la liaison entre les bras de flexion et la masse mobile ou entre les bras de flexion et le point d'ancrage est de type 'poutre encastrée'.

L'utilisation de bras repliés en tant que bras de flexion aide à s'affranchir des effets de non-linéarités, grâce à la très grande souplesse mécanique spécifique à cette forme, tant dans le plan que perpendiculairement au plan. Ces bras permettent de relaxer des éventuelles contraintes intrinsèques aux matériaux constituants.

La structure de couplage entre masses de la figure 2 comprend essentiellement une forme de H à deux liaisons longitudinales 22, 22', une liaison transversale 24 entre les liaisons longitudinales, et des éléments d'accrochage des masses à l'extrémité des liaisons longitudinales, éléments d'accrochage désignés par 26, 28 pour la première masse, et 26', 28' pour la deuxième.

Plus précisément, les liaisons longitudinales 22, 22' s'étendent le long de l'axe sensible et à proximité immédiate de celui-ci, sur toute la longueur des masses mobiles. Une courte liaison transversale 24 les relie. Cette liaison est de préférence le long de l'axe de symétrie transversal A3. Toute l'énergie de vibration mécanique des masses passe par cette liaison transversale 24 qui joue le rôle du pied d'un diapason, mais ce pied n'est pas ancré dans le corps du gyromètre.

A l'extrémité de la liaison longitudinale 22, de part et d'autre de la masse mobile, c'est-à-dire de part et d'autre de l'axe de symétrie transversal A3, on trouve les éléments d'accrochage de la masse. Ces éléments comprennent, aussi bien au-dessus de la masse 14, qu'au-dessous d'elle, un bras transversal 26 de chaque côté de la masse, et un court bras longitudinal 28 servant d'attache entre la masse et le bras transversal 26. Les courts bras longitudinaux 28 sont de préférence sur le deuxième axe de symétrie longitudinale A2. Mais la masse mobile pourrait être accrochée à la rigueur en deux points de chaque bras transversal 26 par deux courts bras longitudinaux 28 symétriques par rapport à l'axe A2.

Les bras longitudinaux 22 sont flexibles dans la direction Ox, et ils sont flexibles dans la direction Oz perpendiculaire au plan. Leur raideur dans ces directions est largement inférieure à la raideur dans les mêmes directions des bras de flexion 13, de sorte que la fréquence de résonance principale des masses vibrantes soit liée presque exclusivement à la raideur des bras de flexion 13 et très peu liée à la raideur des bras 22. Ceci, ajouté au fait que la structure de couplage est attachée à chaque masse selon l'axe de symétrie A2 de la masse, limite les distorsions de la structure au cours de la vibration. La fréquence de résonance principale est la fréquence naturelle de vibration de la masse, la plus proche de la fréquence à laquelle on va exciter électrostatiquement une vibration de la masse selon l'axe Ox.

Bien entendu, les éléments d'accrochage 26', 28' de l'autre masse mobile à l'extrémité des liaisons longitudinales 22' sont rigoureusement symétriques des éléments 26, 28.

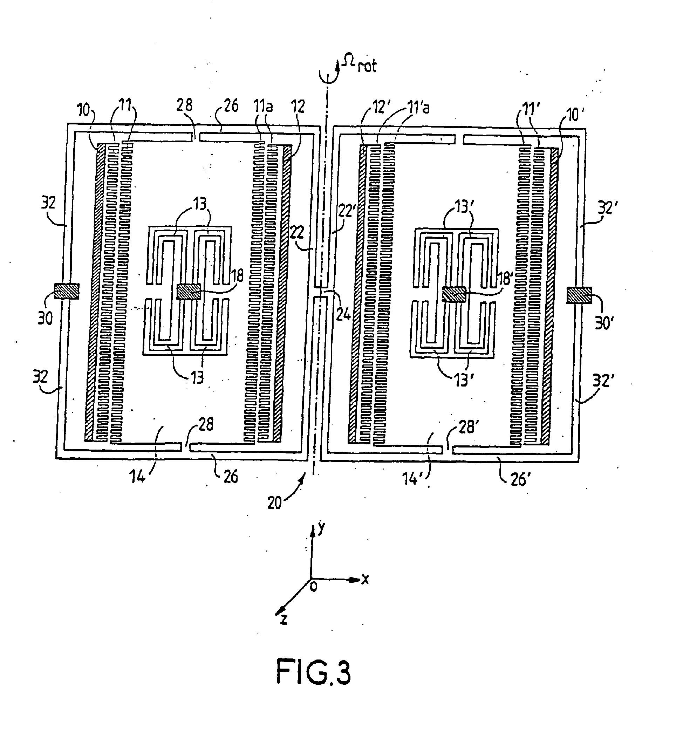

La figure 3 représente une variante de réalisation de l'invention, dans laquelle la structure de couplage 20 est fixée à un pied d'ancrage, et en pratique à deux pieds d'ancrage 30 et 30' symétriques par rapport à l'axe sensible. Les pieds d'ancrage ont l'avantage de faciliter un mouvement de translation verticale pure des masses mobiles, éliminant un effet de rotation partielle dû au fait que les masses se déplacent en opposition de phase par rapport au plan de la figure, c'est-à-dire que l'une monte au dessus du plan de la figure pendant que l'autre descend. Cette opposition de phase est en effet engendrée par le fait que les masses sont excitées en phase par les peignes interdigités 11, 11' (c'est-à-dire que l'une des masses est tirée vers la droite pendant que l'autre est tirée vers la gauche puisque les peignes exercent simultanément une force d'attraction chacun de son côté). Et on souhaite cette opposition de phase de la vibration des masses perpendiculairement au plan puisqu'elle permet d'effectuer une détection directement en mode différentiel, en éliminant les effets de mode commun qui seraient engendrés si les masses se déplaçaient simultanément d'un même côté du plan de la structure.

On notera que les pieds d'ancrage ont cependant un inconvénient en ce sens qu'une partie de l'énergie mécanique de vibration d'une masse est transmise (et de ce fait perdue) au pied d'ancrage au lieu d'être transmise à l'autre masse.

De préférence, les pieds d'ancrage 30 et 30' sont sur l'axe de symétrie transversal A3 et sont situés en des points éloignés de l'axe sensible ; ces points sont de préférence au-delà des peignes d'excitation 11, 11'. Pour cela, la structure de couplage est constituée comme à la figure 2 mais les bras transversaux 26 se prolongent au-delà des bras longitudinaux 28, et se referment autour des masses mobiles par une liaison longitudinale supplémentaire 32 (32' pour l'autre masse mobile) qui court le long de la masse mobile du côté opposé à l'axe sensible. La structure de couplage, symétrique par rapport à l'axe sensible, encadre donc complètement chaque masse mobile et la liaison des deux parties symétriques de cette structure est faite, comme à la figure 2, par une courte liaison transversale 24 entre les liaisons longitudinales 22 et 22'.

Le point d'ancrage 30, 30' est situé au milieu de la liaison longitudinale supplémentaire 32, 32'.

La liaison par bras 28, entre les bras 26 et la masse mobile, est située sur l'axe de symétrie longitudinal de la masse. La raideur des bras 22 et 32 de la structure de couplage est faible devant la raideur des bras de flexion 13 qui supportent la masse, de manière que la fréquence de résonance principale de la masse soit liée beaucoup plus à la raideur des bras 13 qu'à la raideur de la structure de couplage, évitant ainsi des distorsions. Là encore, on rappelle que la fréquence de résonance principale est la fréquence de vibration naturelle de la masse, la plus proche de la fréquence à laquelle une vibration artificielle est engendrée électrostatiquement.

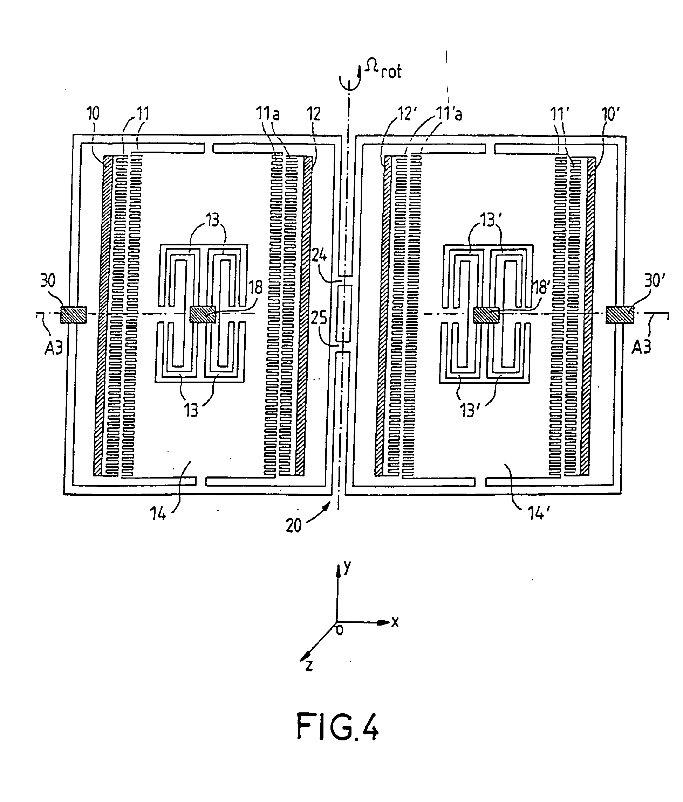

La figure 4 représente une variante de liaison entre les deux parties symétriques de la structure de couplage. Il y a deux courtes liaisons 24 et 25 au lieu d'une seule, proches l'une de l'autre, entre ces parties symétriques. Ces liaisons sont symétriques par rapport à l'axe transversal A2 si le reste de la structure vibrante est symétrique par rapport à cet axe. L'écartement entre ces deux courtes liaisons est choisi pour optimiser le réglage de la fréquence de résonance mécanique du filtre.

Cette disposition particulière peut être utilisée indépendamment du fait que la structure de couplage est ou n'est pas ancrée sur des pieds 30.

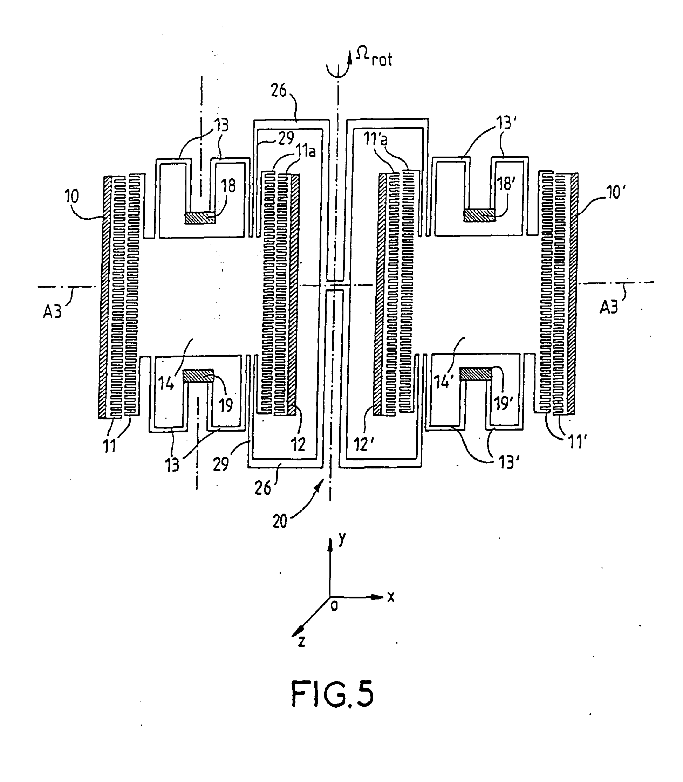

La figure 5 représente une autre variante de réalisation des bras de flexion 13. Comme aux autres figures, les bras de flexion sont situés entre les masses mobiles et un pied d'ancrage et non entre les masses mobiles et la structure de couplage 20.

La différence est que ces bras de flexion ne sont pas situés à l'intérieur du périmètre de la masse mobile mais à l'extérieur, et plus particulièrement dans ce cas de part et d'autre de l'axe de symétrie transversal A3. Il y alors un pied d'ancrage 18 pour les deux bras 13 situés au-dessus de l'axe A3 et un autre pied d'ancrage 19 pour les deux bras situés au-dessous de cet axe. Les pieds d'ancrage sont hors du périmètre de la masse.

La structure de couplage est attachée à la masse mobile non plus sur un axe de symétrie longitudinal tel que l'axe A2 des figures précédentes, ceci parce que le pied d'ancrage 18 ou 19 empêche une fixation à cet endroit, mais latéralement, à côté de la fixation du bras de flexion sur la masse mobile.

Dans l'exemple de la figure 5, on a prévu une fixation de la structure de couplage par un bras longitudinal 29 qui longe une branche d'un bras de flexion en U, d'un côté de celle-ci (ici du côté le plus proche de l'axe sensible).

On pourrait également prévoir que la fixation de la structure de couplage sur un côté de la masse mobile se fasse non pas par un seul bras 29 attaché à un bras transversal 26, mais par deux bras 29 s'étendant à partir d'un bras transversal 26 prolongé vers l'extérieur ; les deux bras 29 encadreraient alors le groupe de deux bras de flexion attaché au pied d'ancrage 18 (ou 19) et seraient attachés à la masse de part et d'autre de ces bras de flexion.

Cette variante de réalisation est compatible avec la disposition de la figure 3 (présence de pieds d'ancrage de la structure de couplage) ; dans ce cas, les bras transversaux 26 s'étendraient jusqu'à l'extérieur de la structure et des bras longitudinaux 32 les relieraient au pied d'ancrage 30. Elle est compatible aussi avec la disposition de la figure 4 (double liaison 24, 25 entre les deux parties symétriques de la structure de couplage).

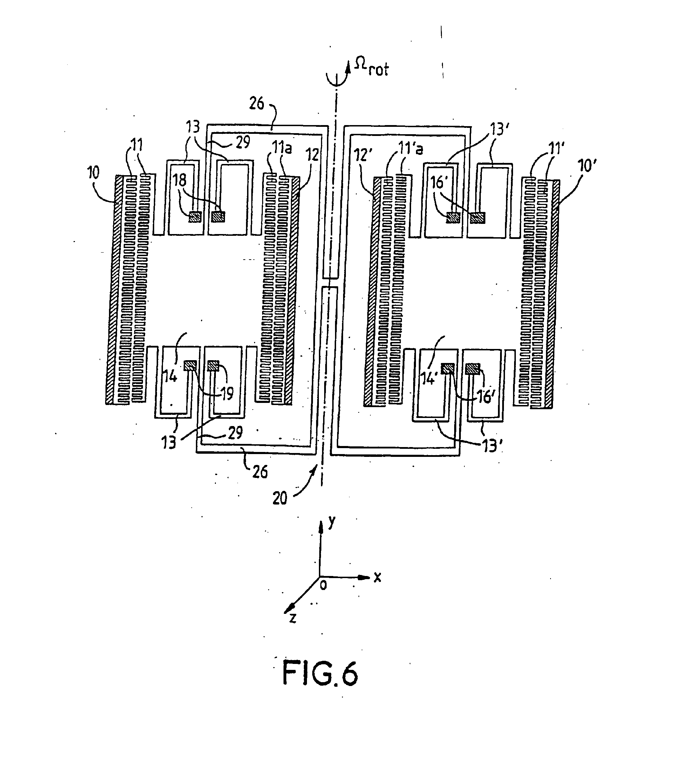

Enfin, la figure 6 représente une variante qui s'inspire de la figure 5 (bras de flexion 13 à l'extérieur de la masse mobile et non au centre de celle-ci). Pour permettre la liaison entre la masse mobile et un bras transversal 26 de la structure de couplage par l'intermédiaire d'un seul bras longitudinal 29 passant cependant par le centre de gravité de la masse mobile, on divise le pied d'ancrage 18 en deux pieds séparés par un espace ; on fait de même pour le pied 19. Le bras 29 peut alors passer entre ces deux pieds. Cette variante est là encore compatible avec les variantes des figures 3 et 4. Elle est plus intéressante que celle de la figure 5, du fait que la structure de couplage est couplée à la masse sur l'axe de symétrie longitudunal de celle-ci (axe A2 sur la figure 2).

On a ainsi décrit diverses réalisations reposant sur le principe de l'invention. Dans chacun de ses modes, on voit qu'on n'a plus besoin des bras de torsion 17 qui étaient nécessaires dans une réalisation telle que celle de la figure 1. Les mouvements des masses mobiles (qui sont les mouvements détectés capacitivement par des électrodes en vis-à-vis sur une masse mobile et sur un substrat fixe) sont des mouvements pratiquement en translation pure et non une composition d'un mouvement de rotation et d'un mouvement de translation. Les asservissements électriques en sont d'autant plus faciles lorsqu'on prévoit un tel asservissement.

Enfin, ces structures sont de ce fait tout-à-fait aptes à conserver un espacement le plus constant possible sur toute la surface de la masse mobile, entre l'électrode de cette masse et l'électrode en vis-à-vis sur un substrat fixe du gyromètre.

## Revendications

1. Gyromètre micro-usiné à structure mobile plane ancrée sur un substrat fixe, la structure mobile étant symétrique autour d'un premier axe, dit axe sensible (A1), contenu dans ce plan, la structure comprenant deux masses mobiles (14, 14') attachées à des bras de flexion (13) dont la raideur définit la fréquence de résonance principale des masses, l'ensemble d'une masse mobile et de ses bras de flexion étant symétrique par rapport à un deuxième axe (A2) parallèle à l'axe sensible et par rapport à un troisième axe (A3) perpendiculaire à l'axe sensible, une structure (11) d'excitation de la vibration de chaque masse dans le plan de la structure, une structure de détection d'une vibration des masses transversalement au plan, et une structure de couplage mécanique (20) pour relier les masses entre elles en assurant un transfert d'énergie mécanique de vibration l'une à l'autre, **caractérisé en ce que** les bras de flexion (13) reliés à une masse mobile (14) sont attachés à la masse mobile d'un côté, à un pied d'ancrage fixe (18) de l'autre, la structure de couplage entre masses étant reliée directement aux masses mobiles d'une manière indépendante des bras de flexion et cette structure de couplage ayant une raideur notablement différente de la raideur des bras de flexion de manière que la fréquence de résonance principale des masses ne dépende que peu de la raideur de la structure de couplage.

2. Gyromètre selon la revendication 1, **caractérisé en ce que** la structure de couplage est attachée à la masse mobile en deux points seulement (28), situés sur un axe de symétrie longitudinale (A2) de la masse mobile parallèle à l'axe sensible (A1).

3. Gyromètre selon l'une des revendications 1 et 2, **caractérisé en ce que** les bras de flexion (13) sont chacun replié en forme de U, l'extrémité d'une branche du U étant attachée à la masse mobile et l'extrémité de l'autre branche étant reliée au dit point d'ancrage (18) fixe.

4. Gyromètre selon l'une des revendications 1 à 3aractérisé en ce qu'il comporte deux peignes interdigités d'excitation (11, 11'), pour la mise en vibration de chaque masse dans le plan par des forces électrostatiques, et deux peignes interdigités de détection (11 a, 11'a) pour la détection et le contrôle de cette vibration.

5. Gyromètre selon l'une des revendications 1 à 4, **caractérisé en ce que** les bras de flexion (13) sont disposés symétriquement par rapport à un deuxième axe (A2), qui est parallèle à l'axe sensible, et qui constitue un axe de symétrie de la masse mobile.

6. Gyromètre micro-usiné selon la revendication 5, **caractérisé en ce que** chaque masse (14) est reliée à quatre bras de flexion (13) en U, l'ensemble de la masse et des quatre bras de flexion ayant une configuration symétrique par rapport à un troisième axe (A3), perpendiculaire à l'axe sensible.

7. Gyromètre selon la revendication 6, **caractérisé en ce que** chaque masse mobile est reliée par ses bras de flexion à un point d'ancrage respectif localisé en un centre de symétrie de la masse mobile, au croisement du deuxième (A2) et du troisième (A3) axes.

8. Gyromètre selon la revendication 6, **caractérisé en ce que** chaque masse est reliée par deux bras de flexion à un premier point d'ancrage (18, 19), et par deux autres bras de flexion à un deuxième point d'ancrage (19) symétrique du premier par rapport au troisième axe, les deux points d'ancrage étant situés de part et d'autre de la masse mobile.

9. Gyromètre selon la revendication 6, **caractérisé en ce que** chaque masse mobile est reliée par quatre bras de flexion à quatre points d'ancrage agencés selon une configuration symétrique par rapport à un centre de gravité de la masse mobile.

10. Gyromètre selon l'une des revendications précédentes, **caractérisé en ce que** la structure de couplage (20) reliant les deux masses mobiles, comprend au moins deux liaisons longitudinales (22, 22') s'étendant de part et d'autre de l'axe sensible, parallèlement à celui-ci, entre les masses mobiles, au moins une liaison transversale (24) reliant les deux liaisons longitudinales, et au moins deux bras transversaux (26) reliant chaque masse mobile à une liaison longitudinale respective (22), ces deux derniers bras transversaux étant situés de part et d'autre de la masse mobile et étant reliés à la masse mobile.

11. Gyromètre selon la revendication 10, **caractérisé en ce que** la liaison transversale (24) reliant les deux liaisons longitudinales est placée sur un axe de symétrie (A3), perpendiculaire à l'axe sensible, des masses mobiles.

12. Gyromètre selon l'une des revendications 10 et 11, **caractérisé en ce que** la structure de couplage comprend une autre liaison transversale (25) reliant les deux liaisons longitudinales, les deux liaisons transversales étant écartées l'une de l'autre et étant disposées symétriquement par rapport à un axe de symétrie (A3), perpendiculaire à l'axe sensible, des masses mobiles.

13. Gyromètre selon l'une des revendications 10 à 12, **caractérisé en ce que** la structure de couplage comprend en outre, pour chaque masse mobile, deux bras longitudinaux (28, 29), parallèles à l'axe sensible (A1), situés de part et d'autre de la masse mobile et reliant un bras transversal respectif (26) à la masse mobile (14).

14. Gyromètre selon la revendication 13, **caractérisé en ce que** les deux bras longitudinaux (28, 29 fig. 6) sont reliés à la masse mobile de part et d'autre de celle-ci en deux points situés sur un axe de symétrie (A2) de la masse mobile, parallèle à l'axe sensible (fig 6).

15. Gyromètre selon l'une des revendications 10 à 14, **caractérisé en ce que** la structure de couplage est reliée, à au moins un point d'ancrage respectif supplémentaire (30) associé à chaque masse mobile, ce point d'ancrage étant situé de l'autre côté de la masse mobile par rapport à l'axe sensible (A1), les bras transversaux (26) étant reliés à ce point d'ancrage par d'autres liaisons longitudinales respectives (32).

16. Gyromètre selon la revendication 13 prise en combinaison avec la revendication 9, **caractérisé en ce que** les bras longitudinaux (29) passent chacun entre deux points d'ancrage respectifs parmi les quatre points d'ancrage (fig 6).

## Claims

1. A micromachined gyroscope having a plane moving structure anchored to a fixed substrate, the moving structure being symmetrical about a first axis, called the sensitive axis (A1), lying in this plane, the structure comprising two moving masses (14, 14') that are attached to flexure arms (13), the stiffness of which defines the main resonant frequency of the masses, the assembly of a moving mass and its flexure arms being symmetrical with respect to a second axis (A2)parallel to the sensitive axis and with respect to a third axis (A3)perpendicular to the sensitive axis, a structure (11) for exciting the vibration of each mass in the plane of the structure, a structure for detecting a vibration of the masses transverse to the plane, and a mechanical coupling structure (20) for connecting the masses together, ensuring that mechanical vibration energy is transferred from one mass to the other, **characterized in that** the flexure arms (13) connected to a moving mass (14) are attached to the moving mass on one side, to a fixed anchoring point (18) on the other side, the inter-mass coupling structure being connected directly to the moving masses independently of the flexure arms and this coupling structure having a stiffness that is appreciably different from the stiffness of the flexure arms so that the main resonant frequency of the masses depends only slightly on the stiffness of the coupling structure.

2. The gyroscope as claimed in claim 1, **characterized in that** the coupling structure is attached to the moving mass at only two points (28) that lie along an axis of longitudinal symmetry (A2) of the moving mass parallel to the sensitive axis (A1).

3. The gyroscope as claimed in either of claims 1 and 2, **characterized in that** the flexure arms (13) are each folded in the form of a U, the end of one branch of the U being attached to the moving mass and the end of the other branch being connected to said fixed anchoring point (18).

4. The gyroscope as claimed in one of claims 1 to 3, **characterized in that** it includes two interdigitated excitation combs (11, 11') for setting each mass into vibration in the plane by electrostatic forces, and two interdigitated detection combs (11a, 11'a) for detecting and monitoring this vibration.

5. The gyroscope as claimed in one of claims 1 to 4, **characterized in that** the flexure arms (13) are placed symmetrically with respect to a second axis (A2) which is parallel to the sensitive axis and constitutes an axis of symmetry of the moving mass.

6. The micromachined gyroscope as claimed in claim 5, **characterized in that** each mass (14) is connected to four U-shaped flexure arms (13), a combination of the mass and of the four flexure arms having a symmetrical configuration with respect to a third axis (A3) perpendicular to the sensitive axis.

7. The gyroscope as claimed in claim 6, **characterized in that** each moving mass is connected via its flexure arms to a respective anchoring point located at a center of symmetry of the moving mass, at the intersection of the second (A2) and third (A3) axes.

8. The gyroscope as claimed in claim 6, **characterized in that** each mass is connected via two flexure arms to a first anchoring point (18, 19) and via two other flexure arms to a second anchoring point (19) symmetrical with the first with respect to the third axis, the two anchoring points being located on either side of the moving mass.

9. The gyroscope as claimed in claim 6, **characterized in that** each moving mass is connected via four flexure arms to four anchoring points arranged in a symmetrical configuration with respect to a center of gravity of the moving mass.

10. The gyroscope as claimed in one of the preceding claims, **characterized in that** the coupling structure (20) connecting the two moving masses comprises at least two longitudinal links (22, 22') extending on either side of the sensitive axis, parallel to the latter, between the moving masses, at least one transverse link (24) connecting the two longitudinal links, and at least two transverse arms (26) connecting each moving mass to a respective longitudinal link (22), the latter two transverse arms being located on either side of the moving mass and being connected to the moving mass.

11. The gyroscope as claimed in claim 10, **characterized in that** the transverse link (24) connecting the two longitudinal links is placed along an axis of symmetry (A3), perpendicular to the sensitive axis, of the moving masses.

12. The gyroscope as claimed in either of claims 10 and 11, **characterized in that** the coupling structure comprises another transverse link (25) connecting the two longitudinal links, the two transverse links being separated from each other and being placed symmetrically with respect to an axis of symmetry (A3), perpendicular to the sensitive axis, of the moving masses.

13. The gyroscope as claimed in one of claims 10 to 12, **characterized in that** the coupling structure furthermore includes, for each moving mass, two longitudinal arms (28, 29) parallel to the sensitive axis (A1), which arms are located on either side of the moving mass and connect a respective transverse arm (26) to the moving mass (14).

14. The gyroscope as claimed in claim 13, **characterized in that** the two longitudinal arms (28, 29, figure 6) are connected to the moving mass on either side of the latter at two points located on an axis of symmetry (A2) of the moving mass, parallel to the sensitive axis (figure 6).

15. The gyroscope as claimed in one of claims 10 to 14, **characterized in that** the coupling structure is connected to at least one additional respective anchoring point (30) associated with each moving mass, this anchoring point being located on the other side of the moving mass relative to the sensitive axis (A1), the transverse arms (26) being connected to this anchoring point via other respective longitudinal links (32).

16. The gyroscope as claimed in claim 13 taken in combination with claim 9, **characterized in that** the longitudinal arms (29) each pass between two respective anchoring points taken from the four anchoring points (figure 6).

## Patentansprüche

1. Mikrobearbeitetes Gyrometer mit bewegbarer ebener, auf einem festen Substrat verankerter Struktur, wobei die bewegbare Struktur um eine als sensible Achse (A1) bezeichnete erste Achse symmetrisch ist, die in dieser Ebene enthalten ist, wobei die Struktur zwei bewegbare Massen (14, 14') umfasst, die an Biegearmen (13) befestigt sind, deren Steifigkeit die Frequenz der Hauptresonanz der Massen definiert, wobei die Gruppe einer bewegbaren Masse und ihrer Biegearme im Verhältnis zu einer zweiten Achse (A2), die zu der sensiblen Achse parallel ist, und im Verhältnis zu einer dritten Achse (A3), die zu der sensiblen Achse senkrecht ist, symmetrisch ist, eine Struktur (11) zum Auslösen der Vibration jeder Masse in der Ebene der Struktur, eine Struktur zur Detektion einer Vibration der Massen quer zur Ebene und eine Struktur mechanischer Kopplung (20), um die Massen bei Gewährleistung eines Transfers mechanischer Vibrationsenergie von der einen zur anderen untereinander zu verbinden, **dadurch gekennzeichnet, dass** die mit einer bewegbaren Masse (14) verbundenen Biegearme (13) auf der einen Seite mit der bewegbaren Masse, auf der anderen mit einem festen Verankerungsfuß (18) verbunden sind, wobei die Kopplungsstruktur zwischen Massen unabhängig von der Biegearmen mit den bewegbaren Massen direkt verbunden ist und diese Kopplungsstruktur eine Steifheit hat, die sich erheblich von der Steifheit der Biegearme derart unterscheidet, dass die Hauptresonanzfrequenz der Massen nur wenig von der Steifheit der Kopplungsstruktur abhängt.

2. Gyrometer nach Anspruch 1, **dadurch gekennzeichnet, dass** die Kopplungsstruktur nur an zwei Punkten (28), die sich auf einer länglichen Symmetrieachse (A2) der beweglichen Masse parallel zur sensiblen Achse (A1) befinden, mit der beweglichen Masse verbunden ist.

3. Gyrometer nach einem der Ansprüche 1 und 2, **dadurch gekennzeichnet, dass** die Biegearme (13) jeweils U-förmig gefaltet sind, wobei das Ende eines Arms des U mit der beweglichen Masse und das Ende des anderen Arms mit dem festen Verankerungspunkt (18) verbunden ist.

4. Gyrometer nach einem der Ansprüche 1 bis 3, **dadurch gekennzeichnet, dass** es, um jede Masse in der Ebene durch elektrostatische Kräfte in Vibration zu versetzen, zwei ineinander eingreifende Erregungskämme (11, 11') aufweist, und zwei ineinander eingreifende Detektionskämme (11a, 11'a), um diese Vibration festzustellen und zu kontrollieren.

5. Gyrometer nach einem der Ansprüche 1 bis 4, **dadurch gekennzeichnet, dass** die Biegearme (13) im Verhältnis zu einer zweiten Achse (A2), die zur sensiblen Achse parallel ist, symmetrisch angeordnet sind, und die für die bewegliche Masse eine Symmetrieachse bildet.

6. Mikrobearbeitetes Gyrometer nach Anspruch 5, **dadurch gekennzeichnet, dass** jede Masse (14) mit vier U-förmigen Biegearmen (13) verbunden ist, wobei die Gruppe der Masse und der vier Biegearme im Verhältnis zu einer dritten Achse (A3) senkrecht zur sensiblen Achse eine symmetrische Konfiguration hat.

7. Gyrometer nach Anspruch 6, **dadurch gekennzeichnet, dass** jede bewegliche Masse anhand ihrer Biegearme mit einem jeweiligen Verankerungspunkt verbunden ist, der sich in einem Symmetriezentrum der beweglichen Masse am Schnittpunkt der zweiten (A2) und der dritten (A3) Achse befindet.

8. Gyrometer nach Anspruch 6, **dadurch gekennzeichnet, dass** jede Masse anhand von zwei Biegearmen mit einem ersten Verankerungspunkt (18, 19) und anhand von zwei anderen Biegearmen mit einem zweiten Verankerungspunkt (19) verbunden ist, der zum ersten im Verhältnis zur dritten Achse symmetrisch ist, wobei sich die zwei Verankerungspunkte auf der einen und der anderen Seite der beweglichen Masse befinden.

9. Gyrometer nach Anspruch 6, **dadurch gekennzeichnet, dass** jede bewegliche Masse anhand von vier Biegearmen mit vier Verankerungspunkten, die im Verhältnis zu einem Schwerkraftzentrum der beweglichen Masse gemäß einer symmetrischen Konfiguration angeordnet sind, verbunden ist.

10. Gyrometer nach einem der vorangehenden Ansprüche, **dadurch gekennzeichnet, dass** die Kopplungsstruktur (20), die die zwei beweglichen Massen verbindet, mindestens zwei Längsverbindungen (22, 22') umfasst, die sich auf der einen und der anderen Seite der sensiblen Achse parallel zu dieser zwischen den beweglichen Massen erstrecken, wobei mindestens eine Querverbindung (24) die zwei Längsverbindungen verbindet, und mindestens zwei Querarme (26) jede bewegliche Masse mit einer jeweiligen Längsverbindung (22) verbinden, wobei sich diese zwei letzteren Querarme auf der einen und der anderen Seite der beweglichen Masse befinden und mit der beweglichen Masse verbunden sind.

11. Gyrometer nach Anspruch 10, **dadurch gekennzeichnet, dass** die Querverbindung (24), die die zwei Längsverbindungen verbindet, auf einer Symmetrieachse (A3) senkrecht zur sensiblen Achse der beweglichen Massen platziert ist.

12. Gyrometer nach einem der Ansprüche 10 und 11, **dadurch gekennzeichnet, dass** die Kopplungsstruktur eine andere Querverbindung (25) umfasst, die die zwei Längsverbindungen verbindet, wobei die zwei Querverbindungen voneinander beabstandet sind und im Verhältnis zu einer Symmetrieachse (A3) senkrecht zur sensiblen Achse der beweglichen Massen symmetrisch angeordnet sind.

13. Gyrometer nach einem der Ansprüche 10 bis 12, **dadurch gekennzeichnet, dass** die Kopplungsstruktur ferner für jede bewegliche Masse zwei zur sensiblen Achse (A1) parallele Längsarme (28, 29) umfasst, die sich auf der einen und der anderen Seite der beweglichen Masse befinden und einen jeweiligen Querarm (26) mit der beweglichen Masse (14) verbinden.

14. Gyrometer nach Anspruch 13, **dadurch gekennzeichnet, dass** die zwei Längsarme (28, 29, Fig. 6) mit der beweglichen Masse auf der einen und der anderen Seite derselben an zwei Punkten verbunden sind, die sich auf einer zur sensiblen Achse (Fig. 6) parallelen Symmetrieachse (A2) der beweglichen Masse befinden.

15. Gyrometer nach einem der Ansprüche 10 bis 14, **dadurch gekennzeichnet, dass** die Kopplungsstruktur mit mindestens einem jeweiligen zusätzlichen Verankerungspunkt (30), der jeder beweglichen Masse zugeordnet ist, verbunden ist, wobei sich dieser Verankerungspunkt im Verhältnis zur sensiblen Achse (A1) auf der anderen Seite der beweglichen Masse befindet, wobei die Querarme (26) mit diesem Verankerungspunkt anhand anderer jeweiliger Längsverbindungen (32) verbunden sind.

16. Gyrometer nach Anspruch 13, herangezogen in Kombination mit Anspruch 9, **dadurch gekennzeichnet, dass** die Längsarme (29) jeweils durch zwei jeweilige Verankerungspunkte der vier Verankerungspunkte (Fig. 6) laufen.
